(19) Europäisches Patentamt
European Patent Office
Office européen des brevets

(11) Numéro de publication: **0 249 566 B1**

# (12) FASCICULE DE BREVET EUROPEEN

(45) Date de publication de fascicule du brevet: **11.12.91**

(51) Int. Cl.[5]: **A01N 59/26**, A01N 57/12

(21) Numéro de dépôt: **87420118.9**

(22) Date de dépôt: **04.05.87**

## (54) Compositions bactéricides à base de dérivés de l'acide phosphoreux.

(30) Priorité: **09.05.86 US 861543**

(43) Date de publication de la demande: **16.12.87 Bulletin 87/51**

(45) Mention de la délivrance du brevet: **11.12.91 Bulletin 91/50**

(84) Etats contractants désignés: **AT BE CH DE ES FR GB GR IT LI LU NL SE**

(56) Documents cités:
**EP-A- 115 466**
**DD-A- 231 482**
**FR-A- 2 252 056**
**FR-A- 2 287 174**
**FR-A- 2 451 164**

**CHEMICAL ABSTRACTS, vol. 86, no. 23, 6 juin 1977, page 148, résumé no. 166380z, Columbus, Ohio, US; & JP-A-76 125 750 (INSTITUTE OF PHYSICAL AND CHEMICAL RESEARCH) 02-11-1976**

**CHEMICAL ABSTRACTS, vol. 97, no. 1, 5 juillet 1982, page 228, résumé no. 2159k, Columbus, Ohio, US; C.C. STEVENS et al.: "The control of certain phycomycete diseases of strawberries, apples, vines and hops with applications of fosetyl aluminum", & PROC. BR. CROP PROT. CONF.-PESTS DIS. 1981, 11th(2), 579-87**

(73) Titulaire: **RHONE-POULENC AGROCHIMIE**
**14-20, rue Pierre Baizet**
**F-69009 Lyon(FR)**

(72) Inventeur: **Tepper, Brian L.**
**6308 Hofstrn Court**
**FT, Myers, FL 33906(US)**

(74) Mandataire: **Chrétien, François et al**
**RHONE-POULENC AGROCHIMIE- DPI B.P. 9163**
**F-69263 Lyon Cédex 09(FR)**

**EP 0 249 566 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention a pour objet un procédé pour le traitement des plantes à l'aide de dérivés de l'acide phosphoreux pour la protection contre les maladies bactériennes.

Il est connu d'utiliser l'acide phosphoreux, ses sels ou des sels de certain, ses monoesters notamment le tris 0-éthylphosphonate d'aluminium ou Fosétyl-Al comme matière active contre les maladies fongiques des plantes. Cependant, les propriétés bactéricides de ces dérivés n'ont pas été mis en évidence.

L'invention a donc pour objet un procédé pour le traitement des plantes à l'aide de compositions bactéricides contenant, comme matière active au moins un composé de formule

$$\left(R - O - \underset{\underset{\displaystyle O}{\|}}{\overset{\overset{\displaystyle H}{|}}{P}} - O^{-}\right)_{n} M^{n+}$$

dans laquelle :

R est un atome d'hydrogène ou un radical alcoyle de 1 à 4 atomes de carbone,

M est un atome d'hydrogène ou d'un métal alcalin, alcalinoterreux ou d'aluminium et

n est un nombre entier égal à la valence de M,

De préférence, les compositions selon l'invention contiennent comme matière active, l'acide phosphoreux, ses sels alcalins et alcalinoterreux ou les éthylphosphites alcalins, de calcium ou d'aluminium.

Les propriétés bactéricides des composés selon l'invention et des compositions les contenant sont illustrées dans les exemples suivants.

Exemple 1 :

On contamine avec Xanthomonas campestris des plants de tomate groupés par 3 dans des pots de 15 cm de diamètre, puis après incubation à 28° C pendant 24 heures dans des sacs de polyéthylène on traite par pulvérisation jusqu'au début de ruissellement à l'aide d'une dispersion aqueuse d'une poudre mouillable, disponible dans le commerce, contenant 80 % en poids de tris-(0-éthyl-phosphonate) d'aluminium ou foséthyl (composition A).

L'observation de l'efficacité est faite par comptage des lésions foléaires sur tous les plants en se choisissant la feuille la plus attaquée.

Dans ces conditions on observe qu'alors que le témoin inoculé non traité on compte 281 taches par feuille, celles-ci ne sont plus que 45 sur les plants traités avec la composition A à raison de 2,2 kg/ha de foséthyl cette efficacité est comparable à celle de la référence commerciale à base d'hydroxyde de cuivre.

Exemple 2 :

Test in vitro sur des bactéries phytopathogènes

L'activité du composé selon l'invention est testée sur les bactéries phytopathogènes suivantes :

Xanthomonas campestris campestris
Xanthomonas campestris citri
Xanthomonas campestris malvacearum
Xanthomonas campestris oryzae
Erwinia amylovora
Erwinia carotovora atroseptica
Erwinia carotovora carotovora
Erwinia chrysanthemi
Pseudomonas syringae persicae
Pseudomonas syringae lachrymans
Pseudomonas syringae tomato
Corynebacterium michiganense

Dans chaque essai on procède comme suit :
On coule, dans une série de boîtes de Pétri préalablement stérilisées en autoclave à 120° C, un milieu nutritif (milieu Sabouraud) constitué de peptone (10 g/l), de glucose (20 g/l) et d'agar (15 g/l), en surfusion, à raison de 20 ml par boîte.

Pendant le remplissage, on injecte une solution aqueuse de Phoséthyl Al dans le milieu fondu jusqu'à la concentration désirée.

Des boîtes de Pétri analogues aux précédentes, remplies des mêmes quantités du même milieu, mais ne contenant pas la matière active, sont conservées comme témoins.

Au bout de 24 à 48 h, chaque boîte est ensemencée par dépôt d'une suspension aqueuse contenant la bactérie et obtenue par dilution de cent fois d'une suspension de densité optique égale à 1.

Les boîtes sont stockées pendant 2 à 10 jours selon la bactérie testée, à 22° C et la croissance de la bactérie dans les boîtes contenant la matière active est comparée à celles des boîtes témoins.

Dans ces conditions pour chaque bactérie, on observe une inhibition complète (100 %) de la bactérie, à la dose de 100 ppm.

Ces résultats montrent clairement les excellentes propriétés bactéricides des compositions selon l'invention.

Ainsi les compositions selon la présente invention peuvent être utilisées pour la lutte contre les maladies bactériennes des plantes notamment celles dues à Xanthomonas sp. en particulier Xanthomonas campestris pv, par exemple Xanthomonas campestris campestris, Xanthomonas campestris citri, Xanthomonas campestris malvacearum, Xanthomonas campestris oryzae ou Xanthomonas geranii, ou à Erwinia spp, en particulier Erwinia amylovora, Erwinia carotovora atroseptica, Erwinia carotovora carotovora, Erwinia chrysanthemi, ou à Pseudomonas sp en particulier Pseudomonas syringae pv. par exemple Pseudomonas syringae morsprunorum subsp persicae, Pseudomonas syringae lachrymans ou Pseudomonas syringae tomato, ou Pseudomonas solanacearum, ou à Corynebacterium sp., en particulier Corynebacterium michiganense.

Ces maladies peuvent être combattues sur des plantes très variées telles que légumes, en particulier choux, radis, navet, céleri, pomme de terre, tomate, carotte, endive, haricot, cucubirtacées, céréales telles que blé, riz, maïs, ou les arbres fruitiers ou plantes fruitières telles que poiriers, pommiers, pêchers ou des cultures non alimentaires telles que tabac, coton les plantes ornementales et les gazons.

Pour leur emploi pratique, les composés selon l'invention sont rarement utilisés seuls. Le plus souvent ils font partie de compositions. Ces compositions, utilisables pour la protection des végétaux contre les nématodes et les insectes parasites contiennent comme matière active un composé selon l'invention tel que décrit précédemment en association avec les supports solides ou liquides, acceptables en agriculture et les agents tensio-actifs également acceptables en agriculture. En particulier sont utilisables les supports inertes et usuels et les agents tensio-actifs usuels.

Ces compositions peuvent contenir aussi toute sorte d'autres ingrédients tels que, par exemple, des colloïdes protecteurs, des adhésifs, des épaississants, des stabilisants, des séquestrants, etc... ainsi que d'autres matières actives connues à propriétés pesticides (notamment nématicides, insecticides ou fongicides) ou à propriétés favorisant la croissance des plantes (notamment des engrais) ou à propriétés régulatrices de la croissance des plantes. Plus généralement les composés selon l'invention peuvent être associés à tous les additifs solides ou liquides correspondant aux techniques habituelles de la mise en formulation.

Ces doses d'emploi dans le cas d'une utilisation comme bactéricides des composés selon l'invention peuvent varier dans de larges limites, notamment selon la virulence des champignons et les conditions climatiques.

D'une manière générale des compositions contenant 0,5 à 5000 ppm de substance active conviennent bien ; ces valeurs sont indiquées pour les compositions prêtes à l'application. Ppm signifie "partie par million". La zone de 0,5 à 5000 ppm correspond à une zone de $5x10^{-5}$ à 0,5 % (pourcentages pondéraux).

En ce qui concerne les compositions adaptées au stockage et au transport, elles contiennent plus avantageusement de 0,5 à 95 % (en poids) de substance active.

Ainsi donc, les compositions à usage agricole selon l'invention peuvent contenir les matières actives selon l'invention dans de très larges limites, allant de $5.10^{-5}$% à 95 % (en poids).

Selon ce qui a déjà été dit les composés selon l'invention sont généralement associés à des supports et éventuellement des agents tensioactifs.

Par le terme "support", dans le présent exposé, on désigne une matière organique ou minérale, naturelle ou synthétique, avec laquelle la matière active est associée pour faciliter son application sur la plante, sur des graines ou sur le sol. Ce support est donc généralement inerte et il doit être acceptable en agriculture, notamment sur la plante traitée. Le support peut être solide (argiles, silicates naturels ou

synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...).

L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est généralement indispensable lorsque la matière active et/ou le support inerte ne sont pas solubles dans l'eau et que l'agent vecteur de l'application est l'eau.

Les compositions utilisées dans l'invention peuvent être sous des formes assez diverses, solides ou liquides.

Comme formes de compositions solides, on peut citer les poudres pour poudrage (à teneur en matières actives pouvant aller jusqu'à 100 %).

Comme formes de compositions liquides ou destinées constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les granulés, les pâtes.

Les concentrés émulsionnables ou solubles comprennent le plus souvent 10 à 95 % de matière active, les émulsions ou solutions prêtes à l'application contenant, quant à elles, 0,001 à 20 % de matière active. En plus de la matière active et du solvant, les concentrés émulsionnables ou solubles peuvent contenir, quand c'est nécessaire, un co-solvant approprié et de 2 à 20 % d'additifs appropriés, comme des stabilisants, des agents tensioactifs, notamment des émulsifs, des agents de pénétration, des inhibiteurs de corrosion, des colorants, des adhésifs.

A partir de ces concentrés, on peut obtenir par dilution avec de l'eau des émulsions de toute concentration désirée, qui conviennent particulièrement à l'application sur les cultures.

Les suspensions concentrées, également applicables en pulvérisation, sont préparées de manière à obtenir un produit fluide stable ne se déposant pas et elles contiennent habituellement de 10 à 75 % de matière active, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration et des adhésifs et, comme support, de l'eau ou un liquide organique dans lequel la matière active est peu ou pas soluble : certaines matières solides organiques ou des sels minéraux peuvent être dissous dans le support pour aider à empêcher la sédimentation ou comme antigels pour l'eau.

A titre d'exemple, voici la composition de plusieurs suspensions aqueuses selon l'invention :

Exemple A :

On prépare une suspension aqueuse comprenant :

| | |
|---|---|
| matière active | 500 g/l |
| agent mouillant (alcool synthétique en $C_{13}$ polyéthoxylé) | 10 g/l |
| agent dispersant (phosphate de polyaryl phénol éthoxylé salifié) | 50 g/l |
| antigel (propylèneglycol) | 100 g/l |
| épaississant (polysaccharide) | 1,6 g/l |
| biocide (méthylhydroxy-4 benzoate sodé) | 3,3 g/l |
| eau | Q.S.P.1 litre. |

On obtient ainsi une suspension concentrée fluide.

Exemple B - Suspension aqueuse :

On prépare une suspension aqueuse comprenant :

| | |
|---|---|
| matière active | 100 g/l |
| agent mouillant (alkylphénol polyéthoxylé | 5 g/l |
| agent dispersant (Naphtalène sulfonate de Na | 10 g/l |
| antigel (Propylèneglycol) | 100 g/l |
| épaississant (Polysaccharide) | 3 g/l |
| biocide (Formaldéhyde) | 1 g/l |
| eau | Q.S.P.1 litre. |

Exemple C - Suspension aqueuse :

On prépare une suspension aqueuse comprenant :

| | |
|---|---|
| matière active | 250 g/l |
| agent mouillant (alcool synthétique en $C_{13}$ polyéthoxylé | 10 g/l |
| agent dispersant (lignosulfonate de solium) | 15 g/l |
| antigel (urée) | 50 g/l |
| épaississant (Polysaccharide) | 2,5 g/l |
| biocide (Formaldéhyde) | 1 g/l |
| eau | Q.S.P.1 litre. |

Les poudres mouillables (ou poudre à pulvériser) sont habituellement préparées de manière qu'elles contiennent 20 à 95 % de matière active, et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des agents de pénétration, des adhésifs, ou des agents antimottants, colorants, etc...

A titre d'exemple, voici la composition de plusieurs poudres mouillables.

| | |
|---|---|
| matière active | 50 % |
| alcool gras éthoxylé (agent mouillant) | 2,5 % |
| styrylphénol éthoxylé (agent dispersant) | 5 % |
| craie (support inerte) | 42,5 % |

Exemple E : Poudre mouillable à 10 %

| | |
|---|---|
| matière active | 10 % |
| alcool synthétique oxo de type ramifié, en $C_{13}$ éthoxylé par 8 à 10 oxyde d'éthylène (agent mouillant) | 0,75 % |
| lignosulfonate de calcium neutre (agent dispersant | 12 % |
| carbonate de calcium (charge inerte) | qsp 100 % |

Exemple F : Poudre mouillable à 75 % contenant les mêmes ingrédients que dans l'exemple précédent, dans les proportions ci-après :

| | |
|---|---|
| matière active | 75 % |
| agent mouillant | 1,50 % |
| agent dispersant | 8 % |
| carbonate de calcium (charge inerte) | qsp 100 % |

Exemple G : Poudre mouillable à 90 %

| | |
|---|---|
| matière active | 90 % |
| alcool gras éthoxylé (agent mouillant | 4 % |
| styrylphénol éthoxylé (agent dispersant) | 6 % |

Exemple H : Poudre mouillable à 50 %

| | |
|---|---|
| matière active | 50 % |
| mélange de tensio-actifs anioniques et non ioniques (agent mouillant) | 2,5 % |
| lignosulfonate de sodium neutre (agent dispersant) | 5 % |
| argile kaolinique (support inerte) | 42,5 % |

Pour obtenir ces poudres à pulvériser ou poudres mouillables, on mélange intimement la matière active dans des mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée et cette suspension est utilisable très avantageusement en particulier pour l'application sur les feuilles des végétaux•

Les composés selon l'invention peuvent être avantageusement formulés sous la forme de granulés dispersibles dans l'eau également compris dans le cadre de l'invention.

Ces granulés dispersibles, de densité apparente généralement comprise entre environ 0,3 et 0,6, ont une dimension de particules généralement comprise entre environ 150 et 2000 et de préférence entre 300 et 1500 microns.

La teneur en matière active (composé n° 1) de ces granulés est généralement comprise entre environ 1 % et 90 %, et de préférence entre 25 % et 90 %.

Le reste du granulé est essentiellement composé d'une charge solide et éventuellement d'adjuvants tensio-actifs conférant au granulé des propriétés de dispersibilité dans l'eau. Ces granulés peuvent être essentiellement de deux types distincts selon que la charge retenue est soluble ou non dans l'eau. Lorsque la charge est hydrosoluble, elle peut être minérale et de préférence organique. On a obtenu d'excellents résultats avec l'urée. Dans le cas d'une charge insoluble, celle-ci est de préférence minérale, comme par exemple le kaolin ou la bentonite. Elle est alors accompagnée d'agents tensio-actifs (à raison de 2 à 20 % en poids du granulé), adjuvants tensio-actifs dont plus de la moitié est constituée par au moins un agent dispersant, essentiellement anionique, tel qu'un poly(naphtalène sulfonate alcalin ou alcalino terreux) ou un lignosulfonate alcalin ou alcalino-terreux, le reste étant constitué par des mouillants non ioniques ou anioniques tel qu'un alcoyl naphtalène sulfonate alcalin ou alcalino-terreux.

Par ailleurs, bien que cela ne soit pas indispensable, on peut ajouter d'autres adjuvants tels que des agents anti-mousse.

Le granulé selon l'invention peut être préparé par mélange des ingrédients nécessaires puis granulation selon plusieurs techniques en soi connues (drageoir, lit fluide, atomiseur, extrusion, etc..). On termine généralement par un concassage suivi d'un tamisage à la dimension de particule choisie dans les limites mentionnées ci-dessus.

De préférence, il est obtenu par extrusion, en opérant comme indiqué dans les exemples ci-après.

Exemple I : Granulés dispersibles à 90 % de matière active

Dans un mélangeur, on mélange 90 % en poids de matière active et 10 % d'urée en perles. Le mélange est ensuite broyé dans un broyeur à broches. On obtient une poudre que l'on humidifie avec environ 8 % en poids d'eau. La poudre humide est extrudée dans une extrudeuse à rouleau perforé. On obtient un granulé qui est séché, puis concassé et tamisé, de façon à ne garder respectivement que les granulés d'une dimension comprise entre 150 et 2000 microns.

Exemple J : Granulés dispersibles à 75 % de matière active

Dans un mélangeur, on mélange les constituants suivants :

| | |
|---|---|
| matière active | 75 % |
| agent mouillant (alkylnaphtalène sulfonate de sodium | 2 % |
| agent dispersant (polynaphtalène sulfonate de sodium) | 8 % |
| charge inerte insoluble dans l'eau (kaolin) | 15 % |

Ce mélange est granulé en lit fluide, en présence d'eau, puis séché, concassé et tamisé de manière à obtenir des granulés de dimension comprise entre 0,16 et 0,40 mm.

Ces granulés peuvent être utilisés seuls, en solution ou dispersion dans de l'eau de manière à obtenir la dose cherchée. Ils peuvent aussi être utilisés pour préparer des associations avec d'autres matières actives, notamment fongicides, ces dernières étant sous la forme de poudres mouillables, ou de granulés ou suspensions aqueuses.

Les granulés pour épandage ont des dimensions comprises entre 0,1 et 2 mm et peuvent être fabriqués par agglomération ou imprégnation. En général, les granulés contiennent 0,5 à 25 % de matière active et 0 à 10 % d'additifs comme des stabilisants, des agents de modification à libération lente, des liants et des solvants.

Voici deux exemples de composition de granulé :

Exemples K 1 et K 2 :

| | | |
|---|---|---|
| matière active | 50 g | 200 g |
| propylène glycol | 50 g | 50 g |
| éther de cétyle et de polyglycol | 2,5 g | 2,5 g |
| polyéthylène glycol | 35 g | 35 g |
| kaolin (granulométrie : 0,3 à 0,8 mm) | .910 g | 760 g |

Comme cela a déjà été dit, les dispersions et émulsions aqueuses, par exemple des compositions obtenues en diluant à l'aide d'eau une poudre mouillable ou un concentré émulsionnable selon l'invention, sont comprises dans le cadre général des compositions utilisables dans la présente invention. Les émulsions peuvent être du type eau-dans-l'huile ou huile-dans-l'eau et elles peuvent avoir une consistance épaisse comme celle d'une "mayonnaise".

L'invention concerne de plus un procédé de traitement des végétaux contre les nématodes et insectes phytopathogènes.

Ce procédé est caractérisé en ce qu'il consiste à appliquer sur le lieu de culture de ces végétaux une quantité efficace d'une composition contenant comme matière active un composé selon la formule (I). Par "quantité efficace" on entend une quantité suffisante pour permettre le contrôle et la destruction des nématodes et insectes présents sur ces végétaux. Les doses d'utilisation peuvent toutefois varier dans de larges limites selon le parasite à combattre, le type de culture, les conditions climatiques, et selon le composé utilisé.

En pratique des doses allant de 1 g/hl à 500 g/hl correspondant sensiblement à des doses de matière active par hectare de 10 g/ha à 5000 g/ha environ donnent généralement de bons résultats.

**Revendications**

1. Utilisation d'au moins un composé de formule :

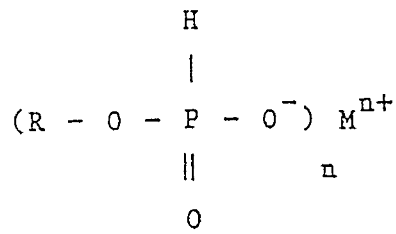

dans laquelle :
R est un atome d'hydrogène ou un radical alcoyle de 1 à 4 atomes de carbone,
M est un atome d'hydrogène ou d'un métal alcalin, alcalinoterreux ou d'aluminium et
n est un nombre entier égal à la valence de M pour la protection des plantes contre les maladies bactériennes

2. Utilisation comme matière active dans une composition bactéricide pour la protection des plantes selon la revendication 1, caractérisé en ce que le composé est le foséthyl-Al.

3. Procédé de traitement des plantes contre les maladies bactériennes, caractérisé en ce que l'on utilise comme bactéricide un composé de formule :

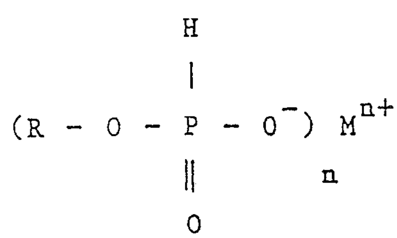

dans laquelle :
R est un atome d'hydrogène ou un radical alcoyle de 1 à 4 atomes de carbone,
M est un atome d'hydrogène ou un métal alcalin, alcalino terreux ou d'aluminium et
n est un nombre entier égal à la valence de M.

4. Procédé de traitement selon la revendication 3, caractérisé en ce qu'il est utilisé pour la lutte contre Xanthomonas spp.

## Claims

1. Use, for the protection of plants against bacterial diseases, of at least one compound of formula:

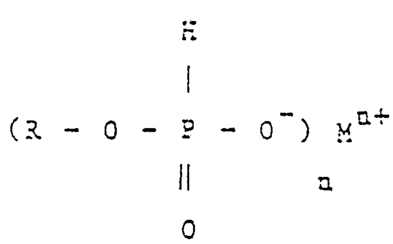

in which:
R is a hydrogen atom or an alkyl radical having 1 to 4 carbon atoms,
M is a hydrogen atom or an alkali metal, alkaline-earth metal or aluminium atom and
n is an integer equal to the valency of M.

2. Use as active ingredient in a bactericidal composition for the protection of plants according to Claim 1, characterised in that the compound is fosethyl-Al.

3. Process for treating plants against bacterial diseases, characterised in that there is used as bactericide a compound of formula:

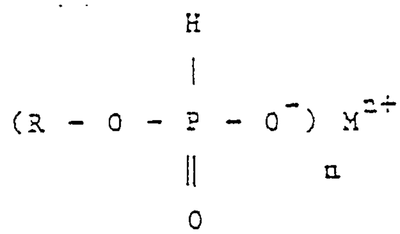

in which:
R is a hydrogen atom or an alkyl radical having 1 to 4 carbon atoms,
M is a hydrogen atom or an alkali metal, alkaline-earth metal or aluminium atom and
n is an integer equal to the valency of M.

4. Treatment process according to Claim 3, characterised in that it is used for combating <u>Xanthomonas sp.</u>

**Patentansprüche**

1. Verwendung mindestens einer Verbindung der Formel

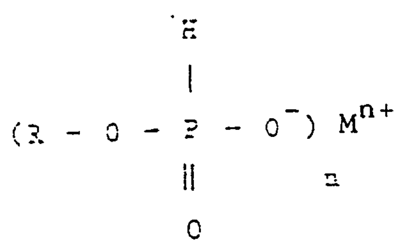

,

in der bedeuten:

- R ein Wasserstoffatom oder $C_{1-4}$-Alkyl,
- M ein Wasserstoffatom, ein Alkalimetallatom, ein Erdalkalimetallatom oder Aluminium und
- n eine der Wertigkeit von M entsprechende ganze Zahl,

zum Schutz von Pflanzen gegen bakterielle Erkrankungen.

2. Verwendung als Wirkstoff in bakteriziden Zusammensetzungen zum Schutz von Pflanzen gemäß Anspruch 1, dadurch gekennzeichnet, daß die verwendete Verbindung Aluminiumfosetyl ist.

3. Verfahren zur Behandlung von Pflanzen gegen bakterielle Erkrankungen, dadurch gekennzeichnet, daß als Bakterizid eine Verbindung der Formel

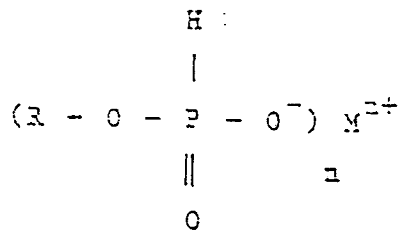

verwendet wird, in der bedeuten:

- R ein Wasserstoffatom oder $C_{1-4}$-Alkyl,
- M ein Wasserstoffatom oder ein Alkalimetallatom, ein Erdalkalimetallatom oder Aluminium und
- n eine der Wertigkeit von M entsprechende ganze Zahl.

**4.** Verfahren zur Behandlung von Pflanzen nach Anspruch 3, gekennzeichnet durch Anwendung zur Bekämpfung von Xanthomonas spp.